# EUROPEAN PATENT SPECIFICATION

(11) **EP 3 040 178 B1**
(45) Date of publication and mention of the grant of the patent: **25.04.2018**
(21) Application number: 14839473.7
(22) Date of filing: 29.08.2014
(51) Int. Cl.: B29C 45/26, B29C 33/20, B29C 45/64, B29C 33/24

(54) **MOLD FOR PRODUCING THREE-DIMENSIONAL ITEMS**
FORM ZUR HERSTELLUNG VON DREIDIMENSIONALEN ARTIKELN
MOULE POUR L'OBTENTION D'ARTICLES TRIDIMENSIONNELS

(30) Priority: 29.08.2013 ES 201331028
(43) Date of publication of application: 06.07.2016
(73) Proprietor: Simplicity Works Europe S.L., 03205 Elche (Alicante) (ES)
(72) Inventor: HERNÁNDEZ HERNÁNDEZ, Adrian, E-03670 Monforte del Cid ( Alicante) (ES)
(74) Representative: Carvajal y Urquijo, Isabel
(86) International application number: PCT/ES2014/070672
(87) International publication number: WO 2015/028695

(56) References cited:
- JP-A- H11 227 002
- JP-A- H11 227 002
- US-A1- 2004 144 835
- US-A1- 2004 144 835

## Description

### Field of the Invention

The present invention relates to a mold for producing three-dimensional items, consisting of at least two mutually attachable pieces, and within which pieces the volume of the item to be produced is delimited. The mold of the invention is particularly conceived for manufacturing items based on plastics.

### Background of the Invention

Molds used for producing pieces by injecting or casting plastics consist of two or more pieces, by means of the coupling of which the volume of the item to be produced is delimited between them. The pieces forming the mold are coupled and attached to one another by mechanical means which, generally, form part of the machines in which are assembled said molds.

In many cases, the molds have to be coupled on high-power machines in order to make the movements thereof, which all makes the general system for injecting or casting plastics, resins, etc., more expensive and makes it impossible to have highly flexible systems because mold changes involve high costs due to the operations and manipulations required and the machine shut-down periods.

Document US2004/0144835 discloses a system and method for forming a seal between members of an assembly. A seal is formed between a first member and a second member bv establishing within the members a bounded volume and creating within the bounded volume a pressure differential with respect to the ambient pressure outside the bounded volume. The pressure differential results in a uniformly applied clamping force to the members thereby creating a reliable seal. A sealing member is positioned between the first and second members and the resulting assembly is mechanically positioned such that heat can then be applied to melt the solder. Concurrently, the pressure differential is created which allows the externally applied mechanical positioning to be relaxed while the members are being sealed together.

### Description of the Invention

The purpose of the present invention is a mold for producing three-dimensional items, particularly made of plastics, formed such that the different pieces forming them can be attached to one another based on the features of said pieces and without the intervention of the machine in which the mold for performing the injection or casting is assembled.

According to the invention, owing to the mutually supporting surfaces between pieces, said pieces forming the mold have formations delimiting airtight chambers between consecutively attached pieces, at least one of the pieces used to form part of each airtight chamber having a pneumatic valve through which the chambers are connected to a vacuum source, by means of which a sufficient negative pressure is created in said chambers to fix the pieces delimiting such chambers to one another.

The pieces forming the mold can consist of a hollow structure, each piece delimiting an airtight chamber. In this case the pieces will have opposing openings in the mutually attachable walls between consecutive pieces, through which openings the different airtight chambers are communicated with one another. These openings will be provided with sealing means between the mutually attachable walls of consecutive pieces. At least one of the pieces will have a pneumatic valve for the connection of the set of communicated chambers to a vacuum source.

According to another possible embodiment, the pieces can have, in the mutually attachable walls of consecutive pieces, opposing recesses provided with peripheral tightness means with which the airtight chambers are delimited when said pieces are attached to one another.

The recesses defining said airtight chambers could also be formed in the mold carriers of the different pieces forming the mold.

The molds will therefore consist of a conventional hollow or solid structure and constitution, and the mold carriers will be what have, on the mutually attachable surfaces of their different components, the recesses which will form the airtight chambers. Therefore, it will be the mold carriers that apply forces on molds that are required for withstanding injection pressures.

In summary, according to the invention the pieces that will form the mold are pressed against one another when the vacuum is created in the airtight chambers as a result of the atmospheric pressure acting on the outer surface of the pieces that weaken said airtight chambers.

In a preferred embodiment, the pieces forming the mold are plastic and consist of a hollow structure with rigid walls which furthermore will be non-deformable as a result of both the vacuum formed between the chambers and the pressures of the injection process.

Additionally, the molds could be provided with a mechanism that cooperates in the fixing between the pieces forming it.

Also and for the purpose of facilitating the injection process, the pieces constituting the mold could be provided, on the mutually supporting surfaces, with a coating based on a film or thin layer of a material that repels the material to be injected.

### Brief Description of the Drawings

The attached drawings show a possible embodiment given by way of nonlimiting example in order to better understand the features of the invention. In the drawings:
Figure 1 shows a perspective view of a plastic tray produced by injection by means of a mold.
Figure 2 shows an exploded perspective view of the mold from which the tray of Figure 1 is produced.
Figure 3 is a perspective view of the mold when it is closed, ready for producing the tray of Figure 1 by injection.
Figure 4 is a longitudinal section of the mold according to section line IV-IV of Figure 3.
Figures 5 and 6 are views similar to Figure 4, showing as many other embodiment variants.

### Detailed Description of an Embodiment

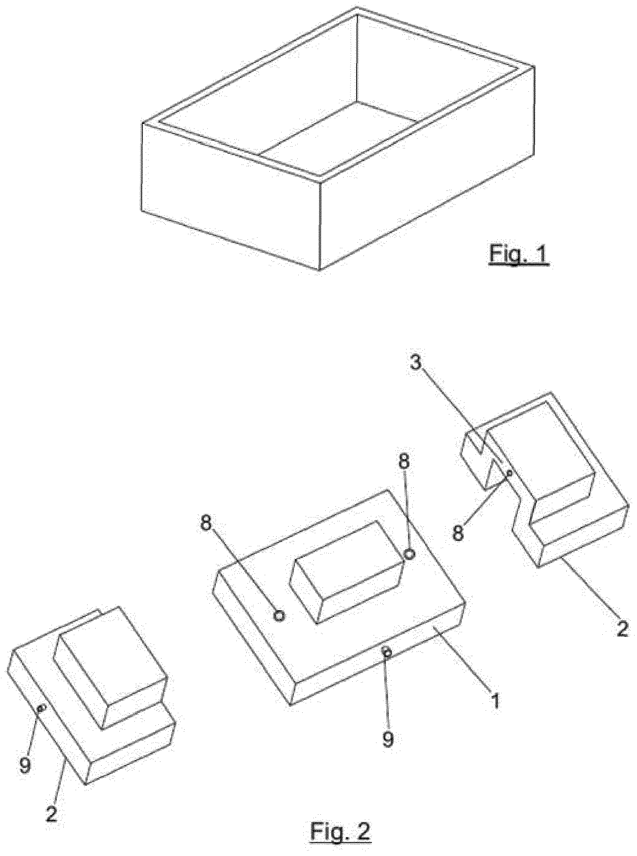

Figure 1 shows a perspective view of a right rectangular prismatic tray 1 open at one of its bases, constituting the piece of plastic to be produced by injection by means of the corresponding mold.

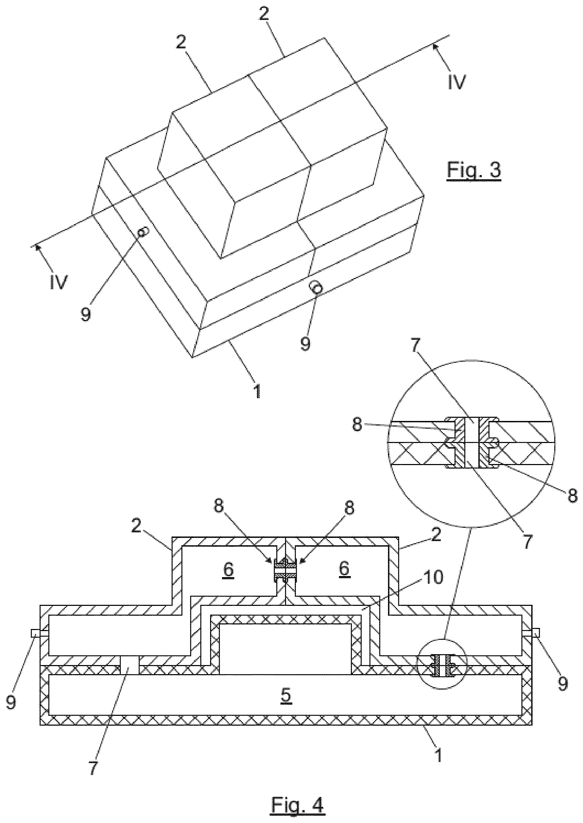

Figure 2 shows a possible constitution of the mold that allows obtaining the tray of Figure 1. This mold is made up of a base piece (1) and two upper symmetrical pieces indicated with reference number (2). These two upper pieces are coupled on the base piece (1), attached to one another through opposing surfaces (3), obtaining an arrangement such as the one shown in Figure 3.

According to the invention, the pieces (1 and 2) consist of a hollow structure, as can be seen in Figure 4, and internally delimit chambers (5 and 6). Preferably, the pieces (1 and 2) consist of a plastic base and the chambers (5 and 6) could be filled with a foam material.

As shown in Figure 4, the pieces (1 and 2) have openings (7) in the mutually attachable walls arranged in opposing position, such that when the different pieces forming the mold are attached to one another, the chambers (5 and 6) are communicated with one another through the openings (7). These openings are provided with sealing means between the attached walls, which can consist, for example, of bushings (8) made of an elastically deformable material which partially project from the openings (7) on rims which support one another to assure the tightness around two openings (7) facing, as can be seen in the detail of Figure 4.

At least one of the pieces forming the mold will have in one of its walls a pneumatic valve (9) through which the set of chambers (5 and 6) are connected to a vacuum source, by means of which a vacuum is created within said chambers sufficient for keeping the pieces (1 and 2) strongly attached to one another.

As can be seen in Figure 4, once the pieces (2) are assembled on the piece (1) and duly adjusted, a space (10) corresponding to the volume of the tray (1) to be produced is delimited between.

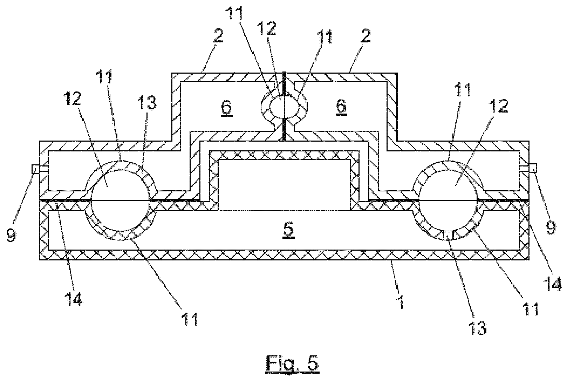

Figure 5 shows an embodiment variant in which the pieces (1 and 2) have, from the outer surface of the mutually attachable walls, recesses (11) located in a coinciding position, such that when said pieces are attached to one another the recesses delimit the chambers (12) which will be in communication with the inner chambers (5 and 6) through openings (13) made in the walls of the recesses (11). With this constitution, when the vacuum is created in the chambers (5 and 6), the same vacuum is produced in the chambers (12), by means of which a greater fixing effect between the different pieces forming the mold is achieved.

The mutually attachable walls of the different pieces can have on their opposing surfaces a coating (14) of an elastically deformable material that assures the seal of the chambers (12).

In the embodiment of Figure 5, the communication between the chambers (5 and 6) could be achieved through the openings (13) of the chambers (12).

Figure 6 shows an embodiment in which the pieces 1 and 2 forming the mold, which can be hollow or solid, have in their walls, from the mutually attachable outer surfaces, opposing recesses (11) delimiting the airtight chambers (12), which can be independent or be communicated with one another, each chamber having in any case a pneumatic valve (9) through which the vacuum will be formed therein.

Finally, it must be indicated that the chamber (12) could be defined by recesses made in mutually attachable surfaces of the mold carriers, in which case the pieces forming the mold would lack said recesses.

Due to the existence of the airtight chambers (12), when the vacuum is formed therein, as a result of the atmospheric pressure applied on the outer surface of the pieces delimiting said chambers, the pieces of the mold are pressed strongly against one another in order to withstand the pressures generated when injecting the material that will make the item to be produced.

As can be understood, the mold will be made up of two or more pieces, depending on the features of the item to be produced.

The walls limiting the chambers (5 and 6) of the pieces (1 and 2) could have an impermeable and non-deformable laminar structure both as a result of the injection pressures and due to the negative pressures that could be created in said chambers. Furthermore, these chambers (5 and 6) could be filled with a foam material, for example an open cell foam material, to assure the transmission of the vacuum between the different chambers.

## Claims

1. A mold for producing three-dimensional items, consisting of at least two mutually attachable pieces (1,2), and within which pieces (1,2) the volume of the item to be produced is delimited,
- said pieces (1,2) having, owing to the mutually supporting surfaces, formations delimiting airtight chambers (5,6) between consecutively attached pieces;
- at least one of the pieces (1,2) used to form part of each airtight chamber (5,6) having a pneumatic valve (9) through which said chambers (5,6) are connected to a vacuum source, by means of which a sufficient negative pressure is created in the chambers (5,6) to fix to one another the pieces (1,2) delimiting such chambers (5,6);
- the walls of the pieces (1,2) being non-deformable as a result of the negative pressure created within the chambers (5,6);
the mold for producing three-dimensional items **characterized in that** said pieces (1,2) consist of a hollow structure, each piece (1,2) delimiting an airtight chamber (5,6), and they have opposing openings (7) in the mutually attachable walls, through which openings (7) the different airtight chambers (5,6) are communicated with one another, said openings (7) being provided with sealing means between the mutually attachable walls of consecutive pieces.

2. The mold according to claim 1, **characterized in that** the different chambers (5,6) delimited between all the pieces (1,2) are communicated with one another in an airtight manner.

3. The mold according to claim 1, **characterized in that** said pieces (1,2) have, in the mutually attachable walls of consecutive pieces (1,2), opposing recesses (11) provided with peripheral tightness means with which the airtight chambers (12) are delimited when said pieces (1,2) are attached to one another.

4. The mold according to claim 1, **characterized in that** the pieces (1,2) constituting the mold have, in the mutually supporting surfaces between said pieces (1,2), a coating consisting of a thin layer of a repellent material that repels the material to be injected.

## Patentansprüche

1. Form zum Herstellen von dreidimensionalen Artikeln, welche aus mindestens zwei gegenseitig anbringbaren Teilen (1,2) besteht, und wobei das Volumen des herzustellenden Artikels innerhalb der Teile (1,2) begrenzt ist,
- wobei die Teile (1,2) aufgrund der Flächen, die sich gegenseitig stützen, Formationen aufweisen, welche luftdichte Kammern (5,6) zwischen aufeinanderfolgend angebrachten Teilen begrenzen;
- wobei mindestens einer der Teile (1,2), welcher verwendet wird, um Bestandteil jeder luftdichten Kammer (5,6) zu sein, ein Druckluftventil (9) aufweist, durch welches die Kammern (5,6) mit einer Vakuumquelle verbunden sind, mittels welcher in den Kammern (5,6) ein ausreichender Unterdruck zum Befestigen der solche Kammern (5,6) begrenzenden Teile (1,2) aneinander erzeugt wird;
- wobei die Wände der Teile (1,2) infolge des Unterdrucks, welcher innerhalb der Kammern (5,6) erzeugt wird, nicht verformbar sind;
wobei die Form zum Herstellen von dreidimensionalen Artikeln **dadurch gekennzeichnet ist, dass** die Teile (1,2) aus einer hohlen Struktur bestehen, wobei jeder Teil (1,2) eine luftdichte Kammer (5,6) begrenzt, und sie gegenüberliegende Öffnungen (7) in den gegenseitig anbringbaren Wänden aufweisen, durch welche Öffnungen (7) die verschiedenen luftdichten Kammern (5,6) miteinander kommunizieren, wobei die Öffnungen (7) zwischen den gegenseitig anbringbaren Wänden der aufeinanderfolgenden Teile mit Dichtungsmitteln bereitgestellt sind.

2. Form nach Anspruch 1, **dadurch gekennzeichnet, dass** die verschiedenen Kammern (5,6), welche zwischen allen Teilen (1,2) begrenzt sind, miteinander auf eine luftdichte Weise kommunizieren.

3. Form nach Anspruch 1, **dadurch gekennzeichnet, dass** die Teile (1,2) in den gegenseitig anbringbaren Wänden aufeinanderfolgender Teile (1,2) gegenüberliegende Aussparungen (11) aufweisen, welche mit peripheren Dichtungsmitteln bereitgestellt sind, mit welchen die luftdichten Kammern (12) begrenzt sind, wenn die Teile (1,2) aneinander befestigt sind.

4. Form nach Anspruch 1, **dadurch gekennzeichnet, dass** die Teile (1,2), welche die Form bilden, in den Flächen zwischen den Teilen (1,2), die sich gegenseitig stützen, eine Beschichtung aufweisen, welche aus einer dünnen Schicht eines abstoßenden Materials, welches das zu injizierende Material abstößt, besteht.

## Revendications

1. Moule pour produire des articles tridimensionnels, consistant en au moins deux pièces pouvant être reliées mutuellement (1, 2), et le volume de l'article à produire est délimité dans lesdites pièces (1, 2),
- lesdites pièces (1, 2) ayant, dû aux surfaces de support mutuel, des formations délimitant des chambres hermétiques (5, 6) entre les pièces reliées consécutivement ;
- au moins l'une des pièces (1, 2) utilisées pour faire partie de chaque chambre hermétique (5, 6) ayant une vanne pneumatique (9) par le biais de laquelle lesdites chambres (5, 6) sont raccordées à une source de vide, au moyen de laquelle une pression négative suffisante est créée dans les chambres (5, 6) pour fixer les pièces (1, 2) entre elles délimitant lesdites chambres (5, 6) ;
- les parois des pièces (1, 2) étant non déformables à la suite de la pression négative créée dans les chambres (5, 6) ;
le moule pour produire des articles tridimensionnels étant **caractérisé en ce que** lesdites pièces (1, 2) consistent en une structure creuse, chaque pièce (1, 2) délimitant une chambre hermétique (5, 6), et elles ont des ouvertures en regard (7) dans les parois pouvant être reliées mutuellement, par le biais desdites ouvertures (7) les différentes chambres hermétiques (5, 6) sont en communication l'une à l'autre, lesdites ouvertures (7) étant pourvues de moyens de scellage entre les parois de pièces consécutives pouvant être reliées mutuellement.

2. Moule selon la revendication 1, **caractérisé en ce que** les différentes chambres (5, 6) délimitées entre toutes les pièces (1, 2) sont en communication entre elles de façon hermétique.

3. Moule selon la revendication 1, **caractérisé en ce que** lesdites pièces (1, 2) ont, dans les parois de pièces consécutives (1, 2) pouvant être reliées mutuellement, des renfoncements en regard (11) pourvus de moyens d'étanchéité périphériques avec lesquels les chambres hermétiques (12) sont délimitées lorsque lesdites pièces (1, 2) sont reliées entre elles.

4. Moule selon la revendication 1, **caractérisé en ce que** les pièces (1, 2) constituant le moule ont, dans les surfaces de support mutuel entre lesdites pièces (1, 2), un revêtement consistant en une fine couche d'un matériau imperméable qui imperméabilise le matériau à injecter.
